# EUROPÄISCHE PATENTSCHRIFT

(11) **EP 1 046 849 B1**
(45) Veröffentlichungstag und Bekanntmachung des Hinweises auf die Patenterteilung: **08.10.2003**
(21) Anmeldenummer: 00108223.9
(22) Anmeldetag: 14.04.2000
(51) Int. Cl.: F16L 9/133

(54) **Zweischichtiges Rohr**
Two-layered tube
Tube à deux couches

(30) Priorität: 20.04.1999 DE 29906998 U
(43) Veröffentlichungstag der Anmeldung: 25.10.2000
(73) Patentinhaber: WAVIN B.V., 8011 CW Zwolle (NL)
(72) Erfinder: Roettgers, Gert, 49828 Georgsdorf (DE); Guettouche, Ali, 49733 Haren (DE); Stoffelsma, Jan Uilke, 7772 XC Hardenberg (NL)
(74) Vertreter: Busse & Busse Patentanwälte

(56) Entgegenhaltungen:
- EP-A- 0 205 237
- EP-A- 0 288 091
- DE-A- 19 503 672
- US-A- 5 518 036
- PATENT ABSTRACTS OF JAPAN vol. 1997, no. 09, 30. September 1997 (1997-09-30) & JP 09 133268 A (SEKISUI CHEM CO LTD), 20. Mai 1997 (1997-05-20)
- DATABASE WPI Section Ch, Week 198815 Derwent Publications Ltd., London, GB; Class A17, AN 1988-101601 XP002140262 & JP 63 051135 A (MITSUBISHI CHEM IND LTD) , 4. März 1988 (1988-03-04)

## Beschreibung

Die Erfindung bezieht sich auf ein Rohr aus zumindest zwei gemeinsam die Rohrwand bildenden, koaxialen Schichten aus thermoplastischen Olefinen gleicher Art, jedoch mit unterschiedlichen Eigenschaften, die untereinander zu einer Rohreinheit verbunden sind.

Bei einem bekannten Rohr dieser Art (DE 296 22 788 U1) besteht die Innenschicht aus einem Polyäthylen hoher Dichte und die Außenschicht aus einem vernetzten Polyäthylen. Durch die Vernetzung des Materials der Außenschicht soll die Kerbempflindlichkeit herabgesetzt werden, um auf diese Weise die Verschleißfestigkeit zu erhöhen und dadurch die Eignung für die grabenlose Verlegetechnik zu verbessern. Solche Rohre sind zwar durch Verschweißen mittels Elektroschweißmuffen verbindbar, wenn auch die Schweißqualität nicht unbedenklich ist, jedoch ist ein Stumpfschweißen der Rohre nicht möglich, weil beim Stumpfschweißen von vernetzten PE-Materialien untereinander die Schweißqualität gemäß DVS 2207 nicht erreicht wird. Da das vernetzte PE-Material nicht wieder aufgeschmolzen und auch nicht ohne weiteres von der Innenschicht aus unvernetztem Polyäthylen entfernt werden kann, ist die Recyclebarkeit solcher Rohre problematisch. Neben den aus dem Fertigungsverfahren resultierenden höheren Herstellungskosten ist auch die Freilagerbarkeit der Rohre mit vernetzter Außenschicht gegenüber normalen Polyäthylenrohren verkürzt.

Bei Ausbildung eines Rohres mit einer Außenschicht aus Polyäthylen, die von der inneren Trägerschicht leicht entfernbar ist (GB 2 263 524), können nach Entfernen der Außenschicht im Verbindungsendbereich der Rohre normale Verbindungstechniken, auch Stumpfschweißung, angewendet werden, jedoch geht das Entfernen der Außenschicht in den Verbindungsbereichen mit der Gefahr einer Beschädigung der Innenschicht einher, abgesehen davon, daß vor einem Recycling die Außenschicht unter Aufwendung entsprechender Kosten entfernt werden muß.

Die Erfindung befaßt sich mit dem Problem, ein Rohr der eingangs genannten Art zu schaffen, das bei einwandfreier Verschweißbarkeit und problemloser Recyclebarkeit auch bei starken Beanspruchungen in der Verlegung eine große Haltbarkeit darbietet.

Die Erfindung löst das Problem durch ein Rohr mit den Merkmalen des Anspruchs 1. Hinsichtlich weiterer Ausgestaltungen wird auf die Ansprüche 2 bis 10 verwiesen.

Das Rohr nach der Erfindung besteht in seinen Schichten aus unvemetztem Material, so daß die Rohre endseitig problemlos mit allen normalen Verbindungstechniken wie Elektromuffen- oder Stumpfschweißen zuverlässig erfolgen kann. Das Rohr ist problemlos recyclebar, da keine störenden vernetzten Bereiche vorhanden sind, und hat eine außerordentlich hohe Haltbarkeit, da das Rißwachstum in der beim Verlegen insbesondere in grabenloser Verlegetechnik kerbbeanspruchten Außenschicht sehr gering ist, was insbesondere auch bei niedrigen Temperaturen, wie sie bei erdverlegten Leitungen für Wasser, Gas usw., üblich sind, gegeben ist.

Untersuchungen der Anmelderin haben gezeigt, daß zwar bei höheren Temperaturen vernetztes Polyäthylen in Vergleich zu unvemetztem sehr gute Eigenschaften hat in bezug auf Kerbempfindlichkeit., aber bei niedrigeren Temperaturen, bei oder unterhalb 20°C, wie sie für erdverlegte Leitungen üblich sind, die Unterschiede zwischen vernetztem und unvemetztem Polyäthylen üblicher Typen viel geringer sind. Hier schafft das Rohr gemäß der Erfindung eine wichtige Verbesserung.

Die Schichten des Rohres sind durch Verschmelzen oder Verschweißen, wie erreicht durch z.B. Coextrusion, zu einer sich wie ein einschichtiges Rohr verhaltenden Rohreinheit verbunden, wobei das Rohr einen genormten Außendurchmesser und ein genormtes Verhältnis von Außendurchmesser zu Gesamtwanddicke (SDR), das im allgemeinen 11 oder 17 beträgt, haben kann.

Die Schichten des Rohres bestehen vorzugsweise aus Polyäthylen hoher Dichte (PEHD), wobei die Schichten des Rohres gleichermaßen aus PE 80 oder PE 100 bestehen können. Statt dessen kann auch die Innenschicht aus PE 100 und die Außenschicht aus PE 80 oder umgekehrt gebildet sein.

Zweckmäßig beträgt die Wanddicke der Außenschicht zumindest 20%, vorzugsweise jedoch 25 bis 35%, der Gesamtwanddicke des Rohres, wobei die Schichten zusammen die Rohrfestigkeit bieten.

Das Material der Außenschicht besteht vorteilhaft aus mit Hexen copolymerisiertem PEHD mit bimodaler Molekulargewichtsverteilung. Eine solche Ausbildung der Außenschicht schafft eine besonders hohe Haltbarkeit bei gleichzeitig hoher Verschleißfestigkeit während Verlegevorgängen und im Betrieb, z.B. im Falle der Wiederverwendung von Bodenaushub bei der Verlegung statt Ersetzung durch Sand, wodurch nachher Punktlasten auf der Rohrleitung auftreten können. Bevorzugt besteht das Material der Außenschicht aus dem PEHD Finathene mit der gegenwärtigen Bezeichnung ER 2241 C bzw. ER 2252C. Anstelle eines Bestehens aus Polyäthylen können die Schichten des Rohres auch aus Polypropylen (PP) bestehen.

Bedarfsweise kann das Material der Außenschicht eine Beimischung eines die UV-Beständigkeit erhöhenden Zuschlagstoffes, z.B. Ruß, oder auch eine Beimischung eines farbgebenden Zuschlagstoffes aufweisen, wenn dies beispielsweise zu Kennzeichnungszwecken erwünscht ist.

In jedem Falle hat die Außenschicht einen zumindest etwa um den Faktor 3 höheren FNCT-Wert (Full Notched Creep Test) als die Innenschicht, die den FNCT-Wert eines einschichtigen Standard-Druckrohres haben soll. Hinsichtlich der Durchführung des Testes für die Ermittlung der FNCT-Werte wird auf den Aufsatz von S.H. Beech, S.J. Palmer und R.W. Burbidge mit dem Titel "ACCELERATED LABORATORY TESTS TO PREDICT THE RESISTANCE TO SLOW CRACK GROWTH OF HIGH PERFORMANCE POLYETHYLENE PIPE RESINS" in 1997 International Plactic Pipe Symposium, S. 205 ff, verwiesen.

Ferner wird verwiesen auf den Aufsatz von M. Fleissner mit dem Titel "Experience With a Full Notch Creep Test in Determining the Stress Crack Performance of Polyethylenes" in POLYMER ENGINEERING AND SCIENCE, Febr. 1998, Vol. 38, No. 2.

Auf der Grundlage der beschriebenen Testbedingungen beträgt bei 95°C, 4,0 Mpa und mit 2% Arkopal N100 als Seife der FNCT-Wert eines einschichtigen Standard-Druckrohres aus PE 100 etwa 200-500 h und der FNCT-Wert des Materials der Außenschicht beträgt erfindungsgemäß zumindest etwa 600-1500 h. Bei Verwendung von PEHD Finathene ER 2252C für die Außenschicht überschreitet der FNCT-Wert 2200 h und erreicht eine Größe von ca. 3000 h.

## Patentansprüche

1. Rohr aus zumindest zwei Schichten aus thermoplastischen Polyolefinen gleicher Art, jedoch mit unterschiedlichen Eigenschaften, die untereinander untrennbar verbunden sind, **dadurch gekennzeichnet, daß** die Schichten aus unvernetztem Material bestehen, die Innenschicht annähernd den FNCT-Wert von 200 - 500 h bei 95°C, 4,0 MPA und 2% Arcopal N 100 - Seife als Test bedingungen eines einschichtigen Standard-Druckrohres hat und die Außenschicht einen zumindest etwa um den Faktor 3 höheren FNCT-Wert aufweist.

2. Rohr nach Anspruch 1, **dadurch gekennzeichnet, daß** die Außenschicht einen zumindest um etwa den Faktor 5 höheren FNCT-Wert aufweist.

3. Rohr nach Anspruch 1 oder 2, **dadurch gekennzeichnet, daß** die Schichten des Rohres durch Verschmelzen oder Verschweißen zu einer sich wie ein einschichtiges Rohr verhaltenden Rohreinheit verbunden sind.

4. Rohr nach einem der Ansprüche 1 bis 3, **dadurch gekennzeichnet daß** die Wanddicke der Außenschicht des Rohres zumindest 20%, vorzugsweise 25 bis 35 %, der Gesamtwanddicke des Rohres beträgt.

5. Rohr nach einem der Ansprüche 1 bis 4, **dadurch gekennzeichnet, daß** die Schichten des Rohres aus Polyäthylen hoher Dichte (PEHD) bestehen.

6. Rohr nach einem der Ansprüche 1 bis 5, **dadurch gekennzeichnet, daß** die Schichten des Rohres aus PE 80 und/oder PE 100 nach ISO-Norm 12 162 bestehen.

7. Rohr nach einem der Ansprüche 1 bis 6, **dadurch gekennzeichnet, daß** das Material der Außenschicht des Rohres aus mit Hexen copolymerisiertem PEHD mit bimodaler Molekulargewichtsverteilung besteht.

8. Rohr nach Anspruch 7, **dadurch gekennzeichnet, daß** das Material der Außenschicht des Rohres aus dem PEHD Finathene ER 2241 C bzw. ER 2252C besteht.

9. Rohr nach einem der Ansprüche 1 bis 4, dadurch gekennzeichnet, daß die Schichten des Rohres aus Polypropylen bestehen.

10. Rohr nach einem der Ansprüche 1 bis 9, **dadurch gekennzeichnet, daß** das Material der Außenschicht des Rohres eine Beimischung eines die UV-Beständigkeit erhöhenden Zuschlagstoffes aufweist.

11. Rohr nach einem der Ansprüche 1 bis 10, **dadurch gekennzeichnet, daß** das Material der Außenschicht des Rohres eine Beimischung eines farbgebenden Zuschlagstoffes aufweist.

## Claims

1. A tube comprising at least two layers of thermoplastic polyolefins of the same kind, but with different properties, which are joined inseparably with one another, **characterised in that** the layers are made of non-crosslinked material, the inner layer has approximately the FCNT value (of 200-500 h at 95°C, 4.0 MPA and 2% Arcopal N100 - soap as test conditions) of a single-layer standard pressure tube and the outer layer has an FNCT value that is higher at least by a factor of around 3.

2. A tube according to the claim 1, **characterised in that** the outer layer has an FNCT value that is higher at least by a factor of around 5.

3. A tube according to claim 1 or 2, **characterised in that** the layers of the tube are joined by fusion or welding to form a tube unit behaving like a single-layer tube.

4. A tube according to any one of claims 1 to 3, **characterised in that** the wall thickness of the outer layer of the tube amounts to at least 20%, preferably 25 to 35%, of the total wall thickness of the tube.

5. A tube according to any one of claims 1 to 4, **characterised in that** the layers of the tube are made of high density polyethylene (HDPE).

6. A tube according to any one of claims 1 to 5, **characterised in that** the layers of the tube are made of PE 80 and/or PE 100 according to ISO standard 12162.

7. A tube according to any one of claims 1 to 6, **characterised in that** the material of the outer layer of the tube is composed of HDPE copolymerised with hexene with a bimodal molecular weight distribution.

8. A tube according to claim 7, **characterised in that** the material of the outer layer of the tube is composed of HDPE Finathene ER 2241C or ER 2252C.

9. A tube according to any one of claims 1 to 4, **characterised in that** the layers of the tube are made of polypropylene.

10. A tube according to any one of claims 1 to 9, **characterised in that** the material of the outer layer of the tube has an admixture of an additive which increases the UV resistance.

11. A tube according to any one of claims 1 to 10, **characterised in that** the material of the outer layer of the tube has an admixture of a colouring additive.

## Revendications

1. Tube constitué d'au moins deux couches de polyoléfines thermoplastiques de même nature mais avec des propriétés différentes, qui sont reliées l'une à l'autre de manière non séparable, **caractérisé en ce que** les couches sont constituées d'un matériau non réticulé, la couche intérieure présentant la valeur FNCT de 200-500 h à 95°C, 4,0 MPa et 2% de savon Arcopal N 100 comme conditions de test d'un tube de pression standard en une couche, la couche extérieure présentant une valeur FNCT supérieure d'au moins un facteur 3.

2. Tube selon la revendication 1, **caractérisé en ce que** la couche extérieure présente une valeur FNCT supérieure d'au moins un facteur 5.

3. Tube selon la revendication 1 ou 2, **caractérisé en ce que** les couches du tube sont reliées par fusion ou soudage en une unité de tube qui se comporte comme un tube en une seule couche.

4. Tube selon l'une quelconque des revendications 1 à 3, **caractérisé en ce que** l'épaisseur de paroi de la couche extérieure du tube vaut au moins 20%, de préférence 25 à 35% de l'épaisseur totale du tube.

5. Tube selon l'une quelconque des revendications 1 à 4, **caractérisé en ce que** les couches du tube sont constituées de polyéthylène à haute densité ("PEHD").

6. Tube selon l'une quelconque des revendications 1 à 5, **caractérisé en ce que** les couches du tube sont constituées de PE 80 et/ou de PE 100 selon la norme ISO 12162.

7. Tube selon l'une quelconque des revendications 1 à 6, **caractérisé en ce que** le matériau de la couche extérieure du tube est constitué de PEHD copolymérisé avec de l'hexène avec une répartition bimodale du poids moléculaire.

8. Tube selon la revendication 7, **caractérisé en ce que** le matériau de la couche extérieure du tube est constitué du PERD Finathene ER 2241 C ou selon le cas ER 2252C.

9. Tube selon l'une quelconque des revendications 1 à 4, **caractérisé en ce que** les couches du tube sont constituées de polypropylène.

10. Tube selon l'une quelconque des revendications 1 à 9, **caractérisé en ce que** le matériau de la couche extérieure du tube présente un mélange avec un additif qui augmente la résistance aux UV.

11. Tube selon l'une quelconque des revendications 1 à 10, **caractérisé en ce que** le matériau de la couche extérieure du tube présente un mélange avec un additif colorant.
